# EUROPEAN PATENT SPECIFICATION

(11) **EP 2 651 268 B1**
(45) Date of publication and mention of the grant of the patent: **05.08.2015**
(21) Application number: 11796693.7
(22) Date of filing: 13.12.2011
(51) Int. Cl.: A47J 19/02

(54) **APPARATUS FOR EXTRACTING JUICE AND PULP FROM FRUIT OR VEGETABLES**
VORRICHTUNG ZUR SAFT- UND FRUCHTFLEISCHAUSPRESSUNG AUS OBST ODER GEMÜSE
APPAREIL D'EXTRACTION DU JUS ET DE LA PULPE DE FRUITS OU DE LÉGUMES

(30) Priority: 13.12.2010 EP 10194779
(43) Date of publication of application: 23.10.2013
(73) Proprietor: Novissa Haushaltgeräte AG, 2555 Brügg b. Biel (CH)
(72) Inventor: STEINER, Wolfgang, CH-2572 Mörigen (CH)
(74) Representative: Scheuzger, Beat Otto
(86) International application number: PCT/EP2011/072602
(87) International publication number: WO 2012/080244

(56) References cited:
- DE-B- 1 098 171
- FR-A1- 2 859 617
- US-A- 2 660 211
- US-A- 5 433 144

## Description

The present invention relates to an apparatus for extracting juice and pulp from fruit or vegetables.

Such an apparatus is for example described in US 2,660,211, which comprises a stationary housing, a strainer, that is rotatable within the housing and has a perforated side wall, a grater, a feeding pipe for fruits or vegetables and an outflow spout. A motor unit drives the strainer. In operation the pulp is hurled outwardly by the centrifugal force against the wall of the strainer. The liquid contained in the vegetable material is thus forced out through the perforated wall, whereupon it is collected within the housing and caused to flow out through the spout. In a first embodiment the strainer has a cylindrical shape. A scraping member is manually swingable about a bold to scrape of pulp from the perforated side wall. Thus pulp subjected to centrifugation may be scraped off by the scraping member, which conveys the pulp into an inner space of the apparatus. In a second embodiment the strainer has a conical perforated wall with a cylindrical upper portion. A scraper is arranged in an opening of the strainer. The resiliency of the scraper is such as to counteract an outwardly directed force acting upon the scraper. The scraper is operated manually by a stop screw, which is used to adjust the scraper to varying distances from the upper cylindrical portion on the strainer. For both embodiments the scrapers are actuated manually, which may be subject of maloperation. Also the operation of the apparatus has to be supervised.

It is an object of the present invention to enhance the yield in the extraction of juice and pulp from fruit or vegetables.

According to a first embodiment a first apparatus is provided for extracting juice and pulp from fruit or vegetables in order to obtain a flowable mass, such as juice or puree, comprising:
a receptacle;
a cylindrical strainer located within said receptacle and rotatable about its axis of symmetry, said cylindrical strainer having a bottom and a perforated side wall;
a motor unit for rotating said cylindrical strainer about its axis of symmetry;
an inlet unit for introducing fruit or vegetables into said strainer;
an outlet unit for collecting flowable mass from said receptacle, characterized in that the apparatus further comprises
a flexible element located within said strainer and urged against the inside surface of said perforated side wall.

According to a second embodiment a second apparatus is provided for extracting juice and pulp from citrus fruit, comprising:
a receptacle;
a strainer, preferably having a cylindrical shape, located within said receptacle and rotatable about a strainer axis, said strainer having a bottom and a perforated side wall;
a citrus mill rotatable about a citrus mill axis, said citrus mill having a citrus mill dome provided with protrusions, preferably ribs, at its outer surface;
a motor unit for rotating said strainer about said strainer axis and for rotating said citrus mill about said citrus mill axis;
an outlet for collecting juice and pulp from said receptacle, characterized in that
said citrus mill is located within said strainer;
said strainer is rotatably driven via a strainer power train operatively connected between said motor unit and said strainer;
said citrus mill is rotatably driven via a citrus mill power train operatively connected between said motor unit and said citrus mill.

The first apparatus and the second apparatus can be transformed into each other by exchanging their respective extraction units.

The extraction unit of the first apparatus includes the cylindrical strainer located within the receptacle and rotatable about its axis of symmetry by the motor unit, said cylindrical strainer having a bottom and a perforated side wall; wherein
the flexible element located within the strainer and urged against the inside surface of the perforated side wall.

The extraction unit of the second apparatus includes the strainer located within the receptacle and rotatable about the strainer axis by the motor unit, said strainer having a bottom and a perforated side wall; the citrus mill rotatable about the citrus mill axis by the motor unit, said citrus mill having a citrus mill dome provided with protrusions, preferably ribs, at its outer surface; wherein
said citrus mill is located within said strainer;
said strainer is rotatably driven via a strainer power train operatively connected between the motor unit and the strainer;
said citrus mill is rotatably driven via a citrus mill power train operatively connected between the motor unit and the citrus mill.

Other objects, advantages, features and applications of the invention(s) will become more apparent from the following detailed description of two preferred embodiments, given as examples not to be construed as limiting the scope of the invention(s), when taken in conjunction with the accompanying drawings.

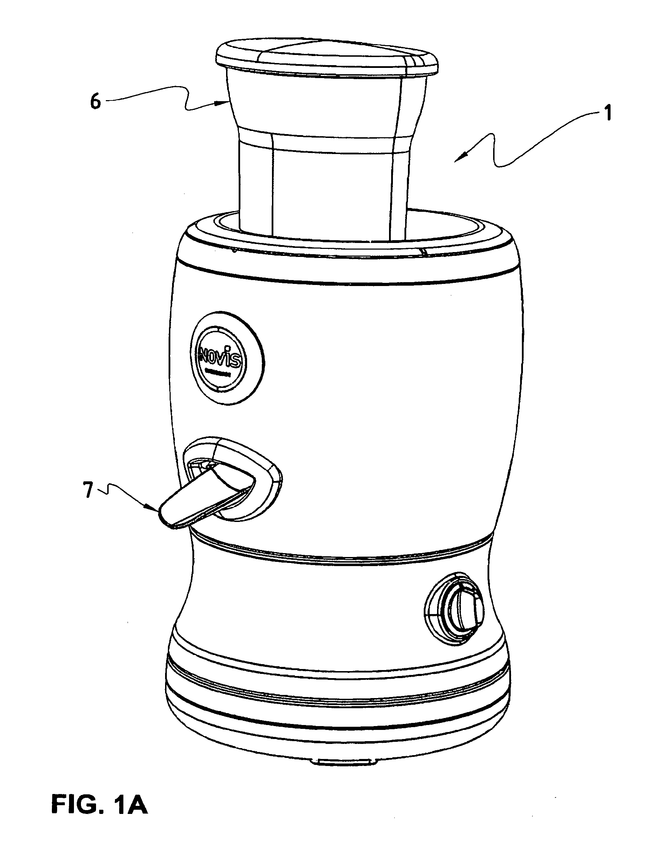

Fig. 1A is a schematic perspective view of the apparatus according to the first embodiment;

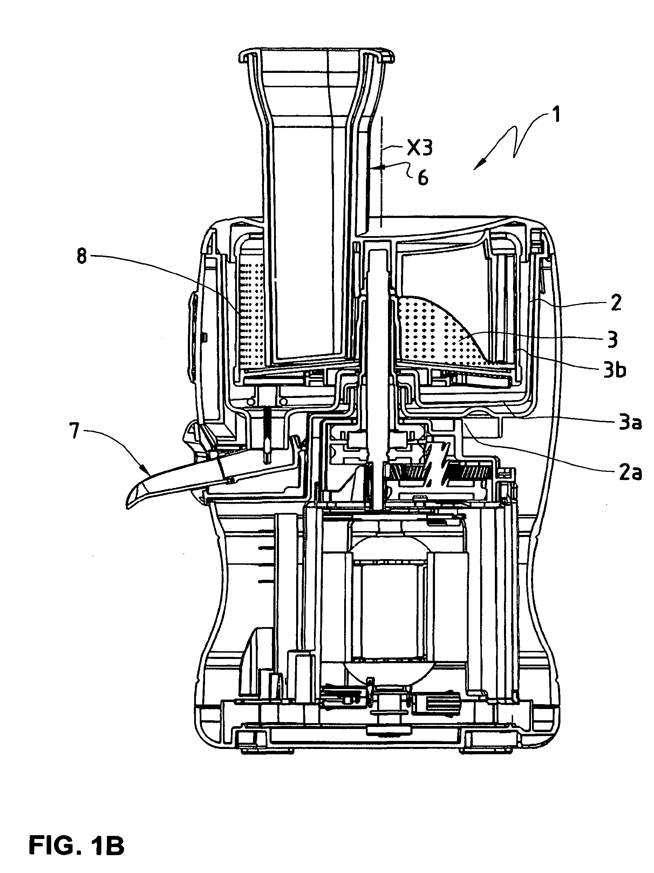

Fig. 1B is a schematic cross-sectional view of a vertical sectional plane of the apparatus according to the first embodiment;

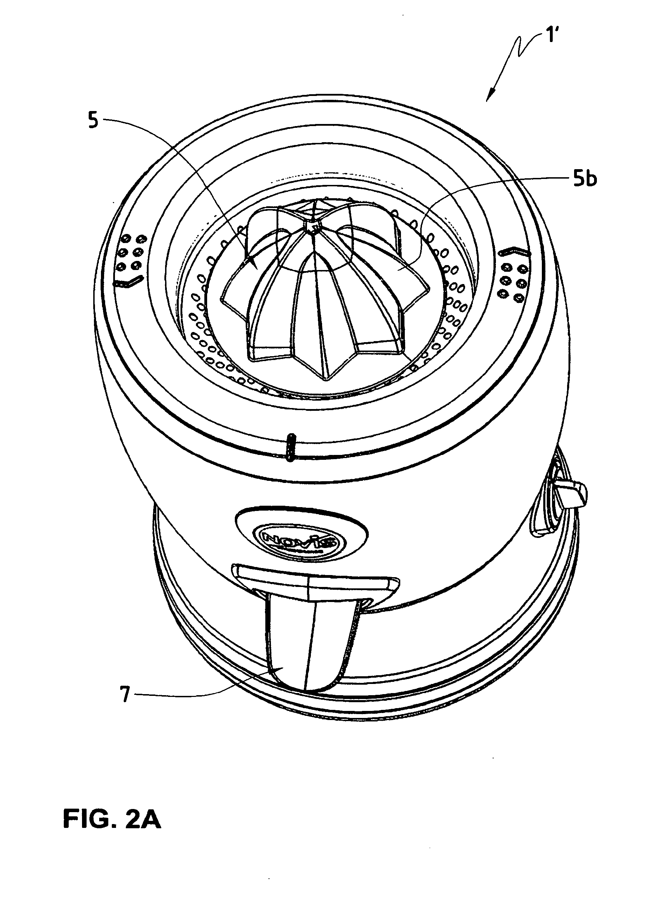

Fig. 2A is a schematic perspective view of the apparatus according to the second embodiment;

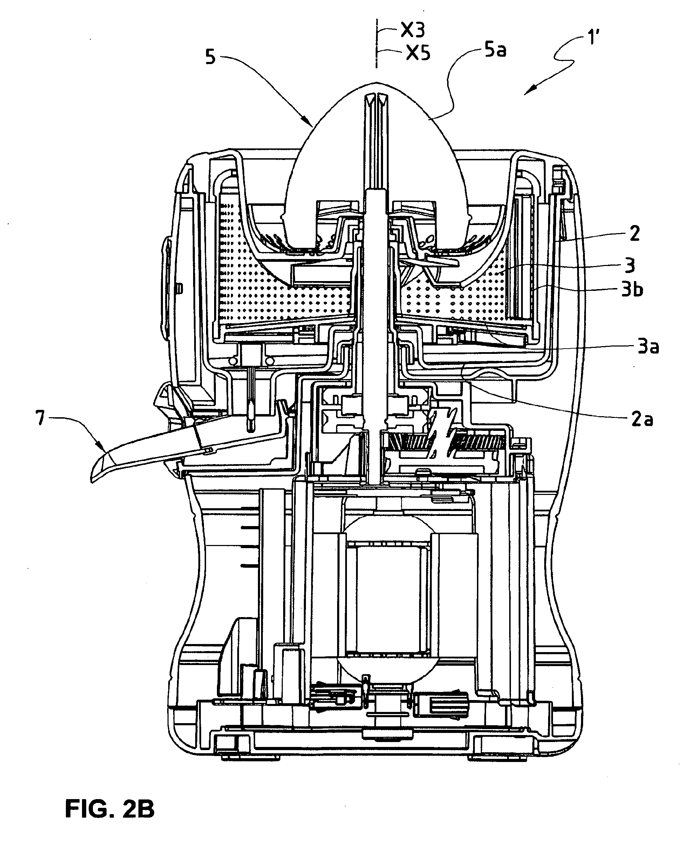

Fig. 2B is a schematic cross-sectional view of a vertical sectional plane of the apparatus according to the second embodiment;

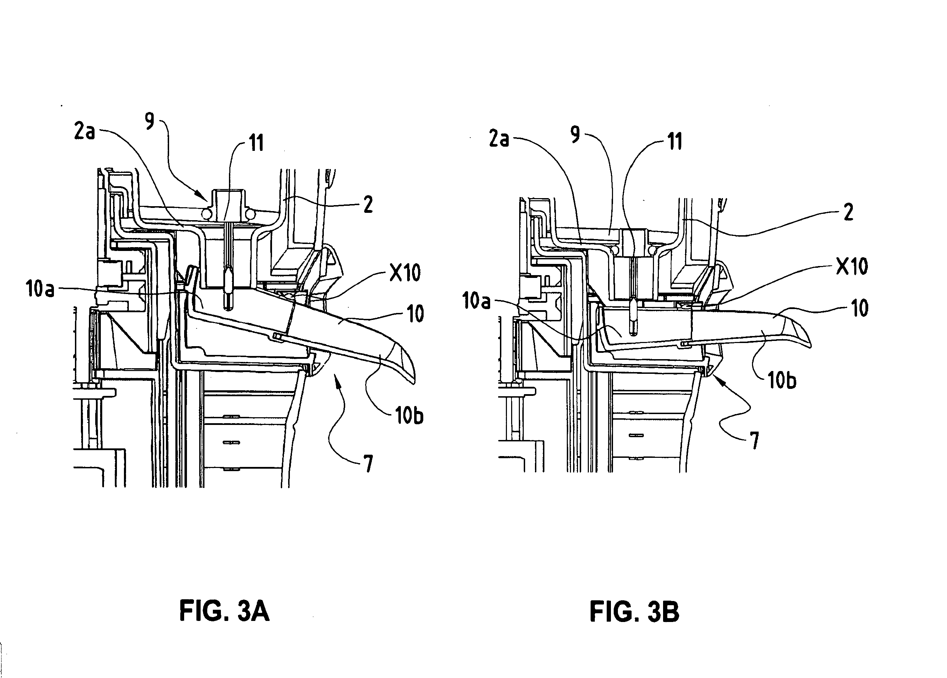

Fig. 3A is a schematic partial cross-sectional view of a vertical sectional plane of the apparatus showing a detail in a first state;
Fig. 3B is a schematic partial cross-sectional view of a vertical sectional plane of the apparatus showing said detail in a second state;

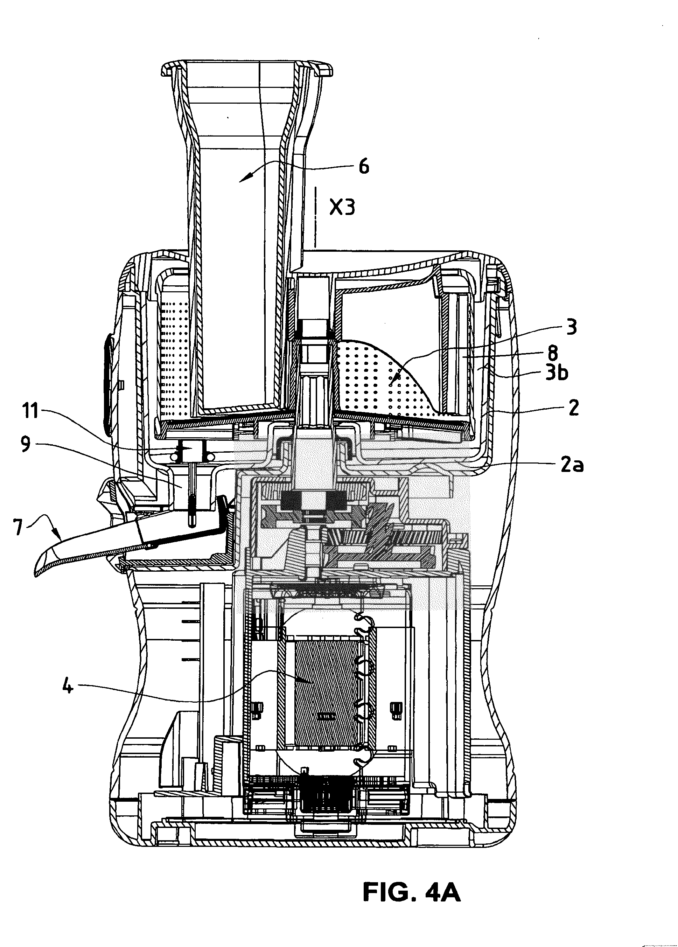

Fig. 4A is a detailed cross-sectional view of a vertical sectional plane of the apparatus according to the first embodiment;

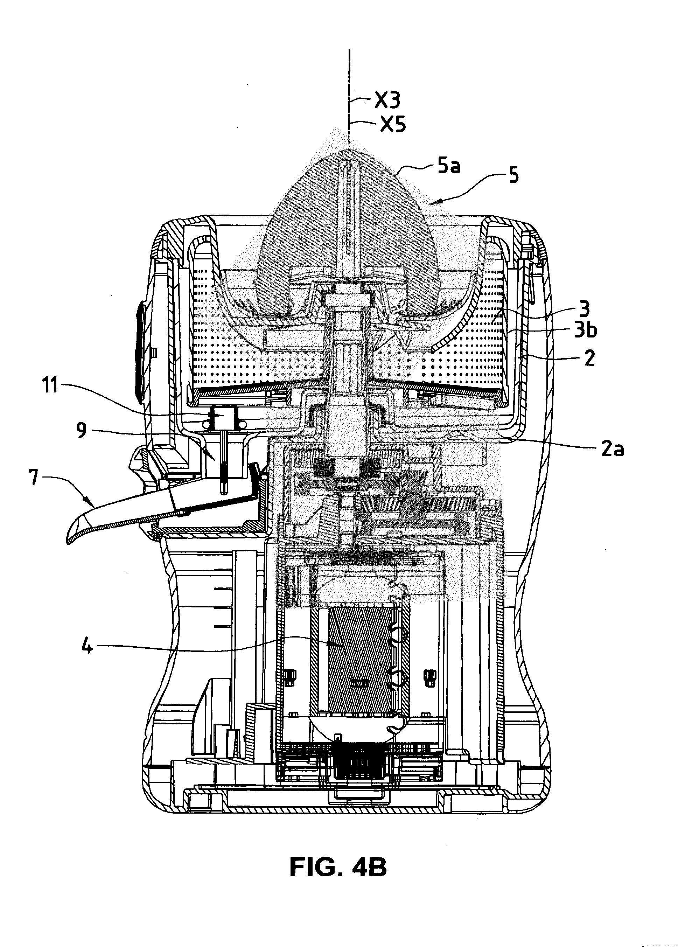

Fig. 4B is a detailed cross-sectional view of a vertical sectional plane of the apparatus according to the second embodiment;

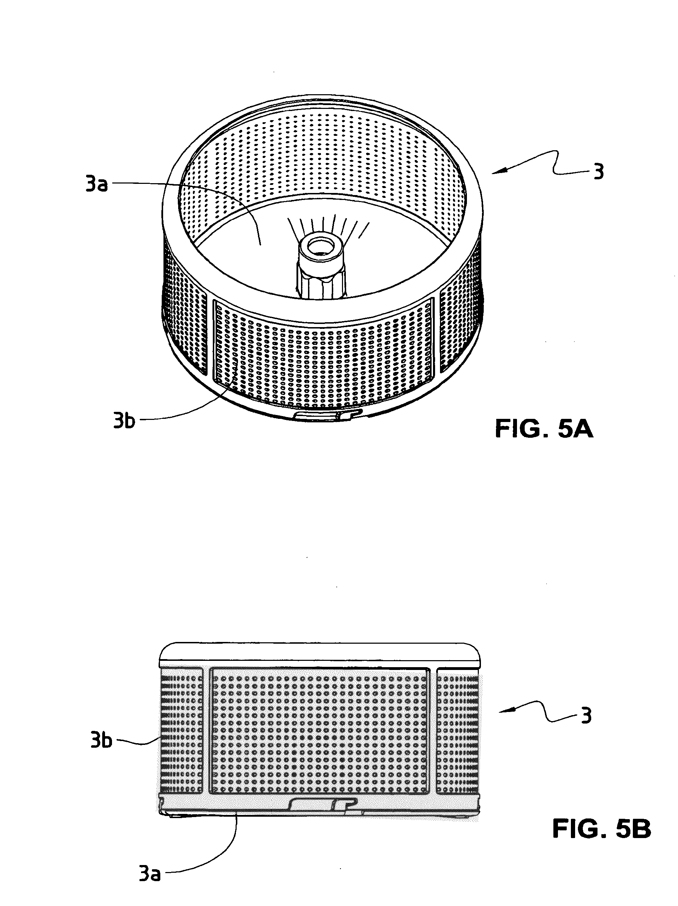

Fig. 5A is a perspective view of an assembled component (strainer) of the apparatus according to both the first and second embodiments;
Fig. 5B is a lateral view of the assembled component of the apparatus according to both the first and second embodiments;

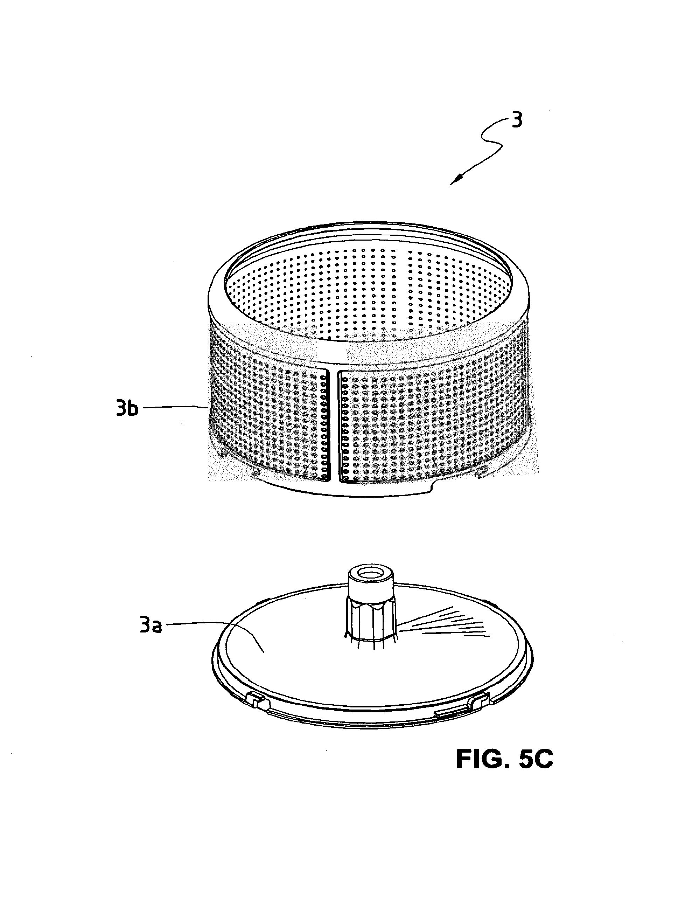

Fig. 5C is a perspective view of the disassembled component of the apparatus according to both the first and second embodiments.

A first apparatus according to the invention for extracting juice and pulp from fruit or vegetables in order to obtain a flowable mass, such as juice or puree, comprises a receptacle (2); a cylindrical strainer (3) located within said receptacle (2) and rotatable about its axis of symmetry (X3), said cylindrical strainer (3) having a bottom (3a) and a perforated side wall (3b); a motor unit (4) for rotating said cylindrical strainer (3) about its axis of symmetry (X3); an inlet unit (6) for introducing fruit or vegetables into said strainer (3); an outlet unit (7) for collecting flowable mass from said receptacle (2). The apparatus further comprises a lip-shaped flexible element (8) located within said strainer (3) and urged against the inside surface of said perforated side wall (3b).

Optionally said flexible element (8) and the inside surface of the perforated wall (3b) are in contact with each other along a line of contact. A surface of the flexible element (8) may face the inside surface of the perforated wall (3b) and form a wedge-shaped space with it which narrows towards said line of contact.

Optionally said line of contact between the flexible element (8) and the inside surface of the perforated wall (3b) extends in parallel to the axis of symmetry of said cylindrical strainer (3).

Optionally the flexible element (8) consists of or comprises an elastomeric material, preferably a thermoplastic elastomer.

Optionally the flexible element (8) comprises a hard core material, preferably a metal or a thermoplastic material, and a soft cover material, preferably an elastomeric material or a thermoplastic elastomer, fitted thereon.

Optionally a first portion of said flexible element (8) is secured to a rigid support element extending within said strainer (3) towards the inside surface of said perforated side wall (3b), and a second portion of said flexible element (8) is urged against the inside surface of said perforated side wall (3b). At least said second portion of the flexible element (8) may be a soft material, preferably an elastomeric material or a thermoplastic elastomer. The rigid support may comprise a support formation and the first portion of said flexible element comprises a flexible element formation complementary to said support formation, for receiving said flexible element formation in said support formation in a form-locking and/or force-locking manner.

Optionally the apparatus may further comprise a drive shaft operatively connected to said motor unit and having a drive shaft formation, wherein the bottom of said cylindrical strainer (3) comprises a bottom formation complementary to said drive shaft formation, for receiving said drive shaft formation in a rotationally fixed manner, and wherein said drive shaft and said bottom can be removably fitted together.

Optionally the cylindrical strainer (3) comprises a bottom part and a perforated side wall (3b) part can be removably fitted together. Both said bottom part and said perforated side wall (3b) part may be made of a polymer material. Alternatively the perforated side wall part may comprise a perforated sheet made of stainless steel permanently fixed in a frame made of a polymer material. Alternatively said perforated side wall part may be made of stainless steel. The polymer material is preferably a thermoplastic material.

The first apparatus comprise a first extraction unit including the cylindrical strainer (3) located within the receptacle and rotatable about its axis of symmetry by the motor unit (4), wherein the cylindrical strainer has a bottom and a perforated side wall, wherein the flexible element 8 is located within the strainer and urged against the inside surface of the perforated side wall.

A second apparatus according to the invention comprises a second extraction unit, which includes a strainer (3) located within said receptacle (2) and having a bottom (3a) and a perforated side wall (3b) as well as a citrus mill (5) rotatable about the citrus mill axis (X5) by the motor unit (4), wherein said citrus mill (5) is located within said strainer (3).

The extraction unit of the first apparatus and the second apparatus are exchangable.

At the second extraction unit the strainer (3) may be rotatably driven via a strainer power train operatively connected between said motor unit (4) and said strainer (3), and said citrus mill (5) is rotatably driven via a citrus mill power train operatively connected between said motor unit (4) and said citrus mill (5).

That means an apparatus comprising a second extraction unit for extracting juice and pulp from citrus fruit comprises: a receptacle (2); a strainer (3); a citrus mill (5); a motor unit (4); a strainer (3), preferably having a cylindrical shape, located within said receptacle (2) and rotatable about a strainer axis (X3), said strainer (3) having a bottom (3a) and a perforated side wall (3b); and an outlet unit (7). The citrus mill (5) is rotatable about a citrus mill axis (X5), and has a citrus mill dome (5a) provided with protrusions (5b), preferably ribs, at its outer surface. The motor unit (4) is designed for rotating said strainer (3) about said strainer axis (X3) and for rotating said citrus mill (5) about said citrus mill axis (X5). The outlet unit (7) is designed for collecting juice and pulp from said receptacle (2). The citrus mill (5) is located within said strainer (3). The strainer (3) is rotatably driven via a strainer power train operatively connected between said motor unit (4) and said strainer (3). The citrus mill (5) is rotatably driven via a citrus mill power train operatively connected between said motor unit (4) and said citrus mill (5).

Optionally the strainer power train may have a strainer transmission ratio SR, defined as strainer rpm divided by motor rpm, and the citrus mill power train has a citrus mill transmission ratio CR, defined as citrus mill rpm divided by motor rpm, and the ratio SR/CR between the strainer transmission ratio SR and said citrus mill transmission ration CR is comprised within 5/1 and 30/1, preferably between 10/1 and 20/1.

Optionally the strainer may have a strainer inner diameter Ri comprised between 10cm and 30cm, preferably between 15cm and 20cm. The strainer is preferably operated at a rotational speed comprised between 1000rpm and 2000rpm.

Optionally the hole diameter of the perforations of said perforated side wall is comprised between 0.5mm and 2mm, preferably between 0.8mm and 1.5mm.

Optionally the apparatus may further comprise a drive shaft operatively connected to said motor unit via said strainer power train and having a drive shaft formation, wherein the bottom of said strainer comprises a bottom formation complementary to said drive shaft formation, for receiving said drive shaft formation in a rotationally fixed manner, and wherein said drive shaft and said bottom can be removably fitted together.

Optionally the strainer may comprise a bottom part and a perforated side wall part which can be removably fitted together.

Optionally both said bottom part and said perforated side wall part are made of a polymer material; or wherein said perforated side wall part comprises a perforated sheet made of stainless steel permanently fixed in a frame made of a polymer material; or wherein said perforated side wall part is made of stainless steel; and wherein said polymer material is preferably a thermoplastic material.

## Claims

1. An apparatus (1) for extracting juice and pulp from fruit or vegetables in order to obtain a flowable mass, such as juice or puree, comprising:
a receptacle (2);
a cylindrical strainer (3) located within said receptacle (2) and rotatable about its axis of symmetry (X3), said cylindrical strainer (3) having a bottom (3a) and a perforated side wall (3b);
a motor unit (4) for rotating said cylindrical strainer (3) about its axis of symmetry (X3);
an inlet unit (6) for introducing fruit or vegetables into said strainer (3);
an outlet unit (7) for collecting flowable mass from said receptacle (2),
**characterized in that** the apparatus further comprises
a lip-shaped flexible element (8) located within said strainer (3) and urged against the inside surface of said perforated side wall (3b).

2. The apparatus according to claim 1, wherein said flexible element (8) and the inside surface of the perforated wall (3b) are in contact with each other along a line of contact.

3. The apparatus according to claim 2, wherein a surface of the flexible element (8) faces the inside surface of the perforated wall (3b) and forms a wedge-shaped space with it which narrows towards said line of contact.

4. The apparatus according to any of the preceding claims, wherein said line of contact between the flexible element (8) and the inside surface of the perforated wall (3b) extends in parallel to the axis of symmetry of said cylindrical strainer (3).

5. The apparatus according to any of the preceding claims, wherein said flexible element (8) consists of or comprises an elastomeric material, preferably a thermoplastic elastomer.

6. The apparatus according to any of the preceding claims, wherein said flexible element (8) comprises a hard core material, preferably a metal or a thermoplastic material, and a soft cover material, preferably an elastomeric material or a thermoplastic elastomer, fitted thereon.

7. The apparatus according to any of the preceding claims, wherein a first portion of said flexible element (8) is secured to a rigid support element extending within said strainer (3) towards the inside surface of said perforated side wall (3b), and a second portion of said flexible element (8) is urged against the inside surface of said perforated side wall (3b).

8. The apparatus according to claim 7, wherein at least said second portion of the flexible element (8) is a soft material, preferably an elastomeric material or a thermoplastic elastomer.

9. The apparatus according to claims 7 or 8, wherein the rigid support comprises a support formation and the first portion of said flexible element comprises a flexible element formation complementary to said support formation, for receiving said flexible element formation in said support formation in a form-locking and/or force-locking manner.

10. The apparatus according to any of the preceding claims, further comprising a drive shaft operatively connected to said motor unit and having a drive shaft formation, wherein the bottom of said cylindrical strainer (3) comprises a bottom formation complementary to said drive shaft formation, for receiving said drive shaft formation in a rotationally fixed manner, and wherein said drive shaft and said bottom can be removably fitted together.

11. The apparatus according to any of the preceding claims, wherein said cylindrical strainer (3) comprises a bottom part and a perforated side wall (3b) part which can be removably fitted together.

12. The apparatus according to claim 11, wherein both said bottom part and said perforated side wall (3b) part are made of a polymer material; or wherein said perforated side wall part comprises a perforated sheet made of stainless steel permanently fixed in a frame made of a polymer material; or wherein said perforated side wall part is made of stainless steel; and wherein said polymer material is preferably a thermoplastic material.

13. The apparatus according to any of the preceding claims, wherein the apparatus comprises an exchangable extraction unit.

14. The apparatus according to claim 13, wherein a first extraction unit includes the cylindrical strainer (3) located within said receptacle (2) and having a bottom (3a) and a perforated side wall (3b), and a second extraction unit includes a strainer (3) located within said receptacle (2) and having a bottom (3a) and a perforated side wall (3b) as well as a citrus mill (5) rotatable about the citrus mill axis (X5) by the motor unit (4), wherein said citrus mill (5) is located within said strainer (3).

15. The apparatus according to claim 14, wherein said strainer (3) is rotatably driven via a strainer power train operatively connected between said motor unit (4) and said strainer (3), and said citrus mill (5) is rotatably driven via a citrus mill power train operatively connected between said motor unit (4) and said citrus mill (5).

## Patentansprüche

1. Gerät (1) zum Extrahieren von Saft und Fruchtmark aus Obst oder Gemüse, um eine fliessfähige Masse wie Saft oder Brei zu erhalten, umfassend:
einen Behälter (2);
ein zylindrisches Sieb (3), das in dem Behälter (2) angeordnet und um seine Symmetrieachse (X3) drehbar ist, wobei das zylindrische Sieb (3) einen Boden (3a) und eine perforierte Seitenwand (3b) aufweist;
eine Motoreinheit (4) zum Drehen des zylindrischen Siebs (3) um seine Symmetrieachse (X3);
eine Einfülleinheit (6) zum Einfüllen von Obst oder Gemüse in das Sieb (3);
eine Auslasseinheit (7) zum Auffangen fliessfähiger Masse von dem Behälter (2),
**dadurch gekennzeichnet, dass** das Gerät ferner Folgendes umfasst:
ein lippenförmiges flexibles Element (8), das in dem Sieb (3) angeordnet und gegen die Innenfläche der perforierten Seitenwand (3b) gepresst ist.

2. Gerät nach Anspruch 1, wobei sich das flexible Element (8) und die Innenfläche der perforierten Wand (3b) entlang einer Berührungslinie berühren.

3. Gerät nach Anspruch 2, wobei eine Oberfläche des flexiblen Elements (8) der Innenfläche der perforierten Wand (3b) zugewandt ist und mit ihr einen keilförmigen Raum bildet, der sich zur Berührungslinie hin verjüngt.

4. Gerät nach einem der vorhergehenden Ansprüche, wobei sich die Berührungslinie zwischen dem flexiblen Element (8) und der Innenfläche der perforierten Wand (3b) parallel zur Symmetrieachse des zylindrischen Siebs (3) erstreckt.

5. Gerät nach einem der vorhergehenden Ansprüche, wobei das flexible Element (8) aus einem Elastomermaterial, vorzugsweise einem thermoplastischen Elastomer, besteht oder es umfasst.

6. Gerät nach einem der vorhergehenden Ansprüche, wobei das flexible Element (8) ein hartes Kernmaterial, vorzugsweise ein Metall oder ein thermoplastisches Material, und ein darauf angebrachtes weiches Deckmaterial, vorzugsweise ein Elastomermaterial oder ein thermoplastisches Elastomer, umfasst.

7. Gerät nach einem der vorhergehenden Ansprüche, wobei ein erster Abschnitt des flexiblen Elements (8) an einem starren Tragelement befestigt ist, das sich innerhalb des Siebs (3) zur Innenfläche der perforierten Seitenwand (3b) hin erstreckt, und ein zweiter Abschnitt des flexiblen Elements (8) gegen die Innenfläche der perforierten Seitenwand (3b) gepresst ist.

8. Gerät nach Anspruch 7, wobei zumindest der zweite Abschnitt des flexiblen Elements (8) ein weiches Material, vorzugsweise ein Elastomermaterial oder ein thermoplastisches Elastomer, ist.

9. Gerät nach Anspruch 7 oder 8, wobei der starre Träger ein Traggebilde umfasst und der erste Abschnitt des flexiblen Elements ein zum Traggebilde komplementäres flexibles Elementgebilde zum formschlüssigen und/oder kraftschlüssigen Aufnehmen des flexiblen Elementgebildes in dem Traggebilde umfasst.

10. Gerät nach einem der vorhergehenden Ansprüche, das ferner eine Antriebswelle umfasst, die betriebsfähig mit der Motoreinheit verbunden ist und ein Antriebswellengebilde aufweist, wobei der Boden des zylindrischen Siebs (3) ein zum Antriebswellengebilde komplementäres Bodengebilde zum drehfesten Aufnehmen des Antriebswellengebildes umfasst und wobei die Antriebswelle und der Boden lösbar zusammengefügt werden können.

11. Gerät nach einem der vorhergehenden Ansprüche, wobei das zylindrische Sieb (3) ein Bodenteil und ein perforiertes Seitenwandteil (3b) umfasst, die lösbar zusammengefügt werden können.

12. Gerät nach Anspruch 11, wobei das Bodenteil und das perforierte Seitenwandteil (3b) aus einem Polymermaterial bestehen; oder wobei das perforierte Seitenwandteil ein Lochblech aus rostfreiem Stahl umfasst, das dauerhaft in einem Rahmen aus einem Polymermaterial befestigt ist; oder wobei das perforierte Seitenwandteil aus rostfreiem Stahl besteht; und wobei das Polymermaterial vorzugsweise ein thermoplastisches Material ist.

13. Gerät nach einem der vorhergehenden Ansprüche, wobei das Gerät eine austauschbare Extraktionseinheit umfasst.

14. Gerät nach Anspruch 13, wobei eine erste Extraktionseinheit das zylindrische Sieb (3) umfasst, das in dem Behälter (2) angeordnet ist und einen Boden (3a) und eine perforierte Seitenwand (3b) aufweist, und eine zweite Extraktionseinheit ein Sieb (3), das in dem Behälter (2) angeordnet ist und einen Boden (3a) und eine perforierte Seitenwand (3b) aufweist, und auch eine Zitruspresse (5) umfasst, die von der Motoreinheit (4) um die Zitruspressenachse (X5) gedreht werden kann, wobei diese Zitruspresse (5) innerhalb des Siebs (3) angeordnet ist.

15. Gerät nach Anspruch 14, wobei das Sieb (3) durch einen Sieb-Antriebsstrang drehend angetrieben wird, der betriebsfähig zwischen der Motoreinheit (4) und dem Sieb (3) angeschlossen ist, und die Zitruspresse (5) durch einen Zitruspressen-Antriebsstrang drehend angetrieben wird, der betriebsfähig zwischen der Motoreinheit (4) und der Zitruspresse (5) angeschlossen ist.

## Revendications

1. Appareil (1) d'extraction de jus et de pulpe d'un fruit ou de légumes afin d'obtenir une masse fluide, telle qu'un jus ou une purée, comprenant :
un réceptacle (2) ;
une passoire cylindrique (3) située à l'intérieur dudit réceptacle (2) et pouvant tourner autour de son axe de symétrie (X3), ladite passoire cylindrique (3) possédant un fond (3a) et une paroi latérale perforée (3b) ;
une unité de moteur (4) pour faire tourner ladite passoire cylindrique (3) autour de son axe de symétrie (X3) ;
une unité d'entrée (6) pour l'introduction du fruit ou des légumes dans ladite passoire (3) ;
une unité de sortie (7) pour recueillir la masse fluide dudit réceptacle (2),
**caractérisé en ce que** l'appareil comprend en outre
un élément flexible en forme de lèvre (8) situé à l'intérieur de ladite passoire (3) et pressé contre la surface intérieure de ladite paroi latérale perforée (3b).

2. Appareil selon la revendication 1, dans lequel ledit élément flexible (8) et la surface intérieure de la paroi perforée (3b) sont en contact entre eux le long d'une ligne de contact.

3. Appareil selon la revendication 2, dans lequel une surface de l'élément flexible (8) fait face à la surface intérieure de la paroi perforée (3b) et forme un espace de forme biseautée avec elle, qui se rétrécit en direction de ladite ligne de contact.

4. Appareil selon l'une quelconque des revendications précédentes, dans lequel ladite ligne de contact entre l'élément flexible (8) et la surface intérieure de la paroi perforée (3b) s'étend en parallèle à l'axe de symétrie de ladite passoire cylindrique (3).

5. Appareil selon l'une quelconque des revendications précédentes, dans lequel ledit élément flexible (8) est constitué de, ou comprend, un matériau élastomère, de préférence un élastomère thermoplastique.

6. Appareil selon l'une quelconque des revendications précédentes, dans lequel ledit élément flexible (8) comprend un matériau d'âme dur, de préférence un métal ou un matériau thermoplastique, et un matériau de couverture mou, de préférence un matériau élastomère ou un élastomère thermoplastique, monté dessus.

7. Appareil selon l'une quelconque des revendications précédentes, dans lequel une première partie dudit élément flexible (8) est fixée à un élément de support rigide s'étendant à l'intérieur de ladite passoire (3) en direction de la surface intérieure de ladite paroi latérale perforée (3b), et une seconde partie dudit élément flexible (8) est pressée contre la surface intérieure de ladite paroi latérale perforée (3b).

8. Appareil selon la revendication 7, dans lequel au moins ladite seconde partie de l'élément flexible (8) est un matériau mou, de préférence un matériau élastomère ou un élastomère thermoplastique.

9. Appareil selon les revendications 7 ou 8, dans lequel le support rigide comprend une formation de support et la première partie dudit élément flexible comprend une formation d'élément flexible complémentaire à ladite formation de support, pour recevoir ladite formation d'élément flexible dans ladite formation de support d'une manière à verrouillage de forme et/ou verrouillage de force.

10. Appareil selon l'une quelconque des revendications précédentes, comprenant en outre un arbre d'entraînement relié de façon opérationnelle à ladite unité de moteur et possédant une formation d'arbre d'entraînement, dans lequel le fond de ladite passoire cylindrique (3) comprend une formation de fond complémentaire à ladite formation d'arbre d'entraînement, pour recevoir ladite formation d'arbre d'entraînement d'une manière fixe en rotation, et dans lequel ledit arbre d'entraînement et ledit fond peuvent être montés ensemble de manière amovible.

11. Appareil selon l'une quelconque des revendications précédentes, dans lequel ladite passoire cylindrique (3) comprend une partie inférieure et une partie de la paroi latérale perforée (3b) qui peuvent être montées ensemble de manière amovible.

12. Appareil selon la revendication 11, dans lequel ladite partie inférieure et ladite partie de la paroi latérale perforée (3b) sont constituées d'un matériau polymère ; ou dans lequel ladite partie de paroi latérale perforée comprend une feuille perforée constituée d'acier inoxydable fixée de manière permanente dans un cadre constitué d'un matériau polymère ; ou dans lequel ladite partie de paroi latérale perforée est constituée d'acier inoxydable ; et dans lequel ledit matériau polymère est de préférence un matériau thermoplastique.

13. Appareil selon l'une quelconque des revendications précédentes, où l'appareil comprend une unité d'extraction interchangeable.

14. Appareil selon la revendication 13, dans lequel une première unité d'extraction comprend la passoire cylindrique (3) située à l'intérieur dudit réceptacle (2) et possédant un fond (3a) et une paroi latérale perforée (3b), et une deuxième unité d'extraction comprend une passoire (3) située à l'intérieur dudit réceptacle (2) et possédant un fond (3a) et une paroi latérale perforée (3b) ainsi qu'un presse-agrumes (5) pouvant tourner autour de l'axe de presse-agrumes (X5) par l'unité de moteur (4), dans lequel ledit presse-agrumes (5) est situé à l'intérieur de ladite passoire (3).

15. Appareil selon la revendication 14, dans lequel ladite passoire (3) est entraînée de manière rotative par l'intermédiaire d'un groupe propulseur de passoire relié de façon opérationnelle entre ladite unité de moteur (4) et ladite passoire (3), et ledit presse-agrumes (5) est entraîné de manière rotative par l'intermédiaire d'un groupe propulseur de presse-agrumes relié de façon opérationnelle entre ladite unité de moteur (4) et ledit presse-agrumes (5).
